# EUROPÄISCHE PATENTANMELDUNG

(11) **EP 1 933 066 A2**
(43) Veröffentlichungstag der Anmeldung: **18.06.2008**
(21) Anmeldenummer: 07122056.0
(22) Anmeldetag: 03.12.2007
(51) Int. Cl.: F16H 63/34

(54) **Schaltvorrichtung für ein Gruppengetriebe mit einer Sperreinrichtung und Verfahren zur Steuerung einer solchen Schaltvorrichtung**

(30) Priorität: 15.12.2006 DE 102006059191
(71) Anmelder: ZF Friedrichshafen AG, 88038 Friedrichshafen (DE)
(72) Erfinder: Birk, Reinhard, 88142, Wasserburg (DE); Lübke, Eckhardt, 88048, Friedrichshafen (DE); Halter, Jürgen, 88048, Friedrichshafen (DE); Preuss, Michael, 88045, Friedrichshafen (DE)

(57) **Zusammenfassung**

Die vorliegende Erfindung betrifft eine Schaltvorrichtung (1) für ein Gruppengetriebe mit einer ersten Schalteinrichtung (9) zum Schalten der Gangstufen einer Gruppe, einer zweiten Schalteinrichtung (10) zum Schalten der Gruppen des Gruppengetriebes und einer Sperreinrichtung (22), die ein Sperrglied (23) aufweist, das von einer Freigabestellung in eine Sperrstellung bewegt werden kann, in der die erste Schalteinrichtung (9) in einer Neutralposition gesperrt ist. Erfindungsgemäß kann das Sperrglied (23) unabhängig von einer Schaltbewegung der zweiten Schalteinrichtung (10) von der Freigabestellung in die Sperrstellung bewegt werden. Die vorliegende Erfindung betrifft ferner ein Verfahren zur Steuerung einer Schaltvorrichtung (1) für ein Gruppengetriebe.

## Beschreibung

Die vorliegende Erfindung betrifft eine Schaltvorrichtung für ein Gruppengetriebe mit einer ersten Schalteinrichtung zum Schalten der Gangstufen einer Gruppe, einer zweiten Schalteinrichtung zum Schalten der Gruppen des Gruppengetriebes und einer Sperreinrichtung, die ein Sperrglied aufweist, das von einer Freigabestellung in eine Sperrstellung bewegt werden kann, in der die erste Schalteinrichtung in einer Neutralposition gesperrt ist. Die vorliegende Erfindung betrifft ferner ein Verfahren zur Steuerung einer Schaltvorrichtung für ein Gruppengetriebe.

Aus dem Stand der Technik ist eine Vielzahl unterschiedlicher Schaltvorrichtungen für Getriebe von Kraftfahrzeugen bekannt. Bei den bekannten Schaltvorrichtungen kommen Schaltschienen bzw. -stangen zum Einsatz, die durch einen manuell betätigbaren Schalthebel o. ä. axial verschoben werden können. Durch die axiale Verschiebung der Schaltschienen wird der gewünschte Gang eingelegt bzw. die entsprechende Gangstufe geschaltet. Insbesondere bei schweren Fahrzeugen sowie bei Fahrzeugen, deren Fahrersitz weit entfernt vom Getriebe angeordnet ist, sind hohe Schaltkräfte erforderlich. Um den Fahrer in einem solchen Fall zu unterstützen bzw. zu entlasten, haben sich in Nutzfahrzeugen der vorgenannten Bauart, wie beispielsweise Omnibusse und Lastkraftwagen, pneumatische Servounterstützungseinrichtungen durchgesetzt, die das Verschieben der Schaltschiene unterstützen, so dass die Schaltkraft nicht mehr allein durch den Fahrer aufgebracht werden muss.

So beschreibt die DE 198 39 854 A1 eine Schaltvorrichtung der zuvor genannten Art. Die Servounterstützungseinrichtung der bekannten Schaltvorrichtung umfasst einerseits eine mit Druckluft versorgbare Unterstützungseinrichtung und andererseits einen mit Druckluft gefüllten Vorratsbehälter, wobei letzterer über eine Anschlussleitung mit der Unterstützungseinrichtung verbunden ist. In der Anschlussleitung ist eine Reduziereinrichtung vorgesehen, mit deren Hilfe die von dem Vorratsbehälter an die Unterstützungseinrichtung geleitete Druckluft begrenzt werden kann. Hierdurch wird eine Anpassung an die zulässigen Belastungen in den von der Unterstützungskraft beaufschlagten Bauteilen erzielt.

Neben den herkömmlichen Schaltvorrichtungen für Kraftfahrzeugwechselgetriebe sind weiterhin Schaltvorrichtungen für Gruppengetriebe bekannt. Bei Gruppengetrieben kommt beispielsweise eine Vorschaltgruppe vor dem Hauptgetriebe zum Einsatz, mittels derer unterschiedliche Eingangsübersetzungen gewählt werden können. So kann meist zwischen einer schnellen Gruppe und einer langsamen Gruppe gewählt werden. Zu diesem Zweck ist ein manuell betätigbarer Gruppenwahlschalter vorgesehen. Durch Betätigung des Gruppenwahlschalters wird eine Gruppenschaltschiene durch eine Pneumatik in eine entsprechende Schaltposition verschoben, in der die gewünschte Gruppe geschaltet ist, wobei die Gruppenschaltschiene erst dann verschoben wird, wenn die Schaltschiene des Hauptgetriebes in eine Neutralposition verschoben ist.

Um bei den bekannten Gruppengetrieben zu verändern, dass die Schaltschienen des Hauptgetriebes verschoben werden, während die Gruppenschaltschiene zwischen den Schaltpositionen verschoben wird, ist ferner eine Sperreinrichtung vorgesehen, die die Schaltschiene in der Neutralposition blockiert bzw. sperrt, wenn sich die Gruppenschaltschiene zwischen den Schaltpositionen bewegt. Die aus der Praxis bekannten Sperreinrichtungen weisen ein Sperrglied auf, das mit Hilfe einer Spiralfeder gegen die Gruppenschaltschiene vorgespannt ist. Die Gruppenschaltschiene weist auf ihrer dem Sperrglied zugewandten Seite eine Kontur auf, der das Sperrglied folgt, wenn die Gruppenschaltschiene bewegt wird. Auf diese Weise wird das Sperrglied von einer Freigabestellung in eine Sperrstellung bewegt, wobei das Sperrglied in der Sperrstellung derart mit der Schaltschiene des Hauptgetriebes zusammenwirkt, dass die Schaltschiene gesperrt ist. Erst wenn die Gruppenschaltschiene die entsprechende Schaltposition erreicht hat, in der beispielsweise die schnelle oder langsame Gruppe geschaltet ist, wird die Schaltschiene des Hauptgetriebes wieder freigegeben, indem das Sperrglied durch die weitere Bewegung der Gruppenschaltschiene wieder in die Freigabestellung verschoben wird.

Die bekannten Schaltvorrichtungen für Gruppengetriebe haben sich bewährt, sind jedoch mit dem Nachteil behaftet, dass die hierin enthaltenen Sperreinrichtungen keine sichere und rechtzeitige Blockierung der Schaltschiene des Hauptgetriebes gewährleisten können. Dies kann bei einem besonders schnellen Schalten der Schaltschiene dazu führen, dass über die Neutralposition der Schaltschiene hinaus geschaltet wird, wodurch die Gruppenschaltschiene lediglich in eine Mittelposition zwischen den beiden Schaltpositionen verschoben ist, während durch die nicht gesperrte Schaltschiene weiterhin eine Gangstufe geschaltet werden kann. Da hierdurch keine Momentenverbindung mehr gegeben ist, kommt es zum Stillstand des Kraftfahrzeugs.

Der vorliegenden Erfindung liegt somit die Aufgabe zugrunde, eine Schaltvorrichtung für ein Gruppengetriebe zu schaffen, das die vorstehend genannten Nachteile überwindet. Darüber hinaus liegt der Erfindung die Aufgabe zugrunde, ein Verfahren zur Steuerung einer Schaltvorrichtung für ein Gruppengetriebe anzugeben.

Die Lösung dieser Aufgabe erfolgt anhand der in Patentanspruch 1 bzw. 10 angegebenen Merkmale. Vorteilhafte Ausführungsformen der Erfindung sind Gegenstand der Unteransprüche.

Die vorliegende Erfindung betrifft eine Schaltvorrichtung für ein Gruppengetriebe und umfasst eine erste Schalteinrichtung, die beispielsweise die Schaltschiene des Hauptgetriebes umfasst, zum Schalten der Gangstufen einer Gruppe, eine zweite Schalteinrichtung, die beispielsweise eine Gruppenschaltschiene aufweist, zum Schalten der Gruppen des Gruppengetriebes und eine Sperreinrichtung. Die Sperreinrichtung weist ein Sperrglied auf, das von einer Freigabestellung in eine Sperrstellung bewegt werden kann. In der Sperrstellung ist die erste Schalteinrichtung in einer Neutralposition gesperrt bzw. blockiert. Es kann demzufolge keine Gangstufe mehr eingelegt werden. Erfindungsgemäß kann das Sperrglied unabhängig von einer Schaltbewegung der zweiten Schalteinrichtung von der Freigabestellung in die Sperrstellung bewegt werden. So kann das Sperrglied durch eine andere Einrichtung, wie beispielsweise durch einen Gruppenwahlschalter, aktiviert werden, wodurch eine sichere und frühzeitige Sperrung der ersten Schalteinrichtung in der Neutralposition möglich ist. Im Gegensatz zu den bekannten Schaltvorrichtungen ist die Bewegung des Sperrgliedes in die Sperrstellung also unabhängig von der Bewegung einer Gruppenschaltschiene o. ä. der zweiten Schalteinrichtung.

In einer bevorzugten Ausführungsform der erfindungsgemäßen Schaltvorrichtung weist die Sperreinrichtung einen ansteuerbaren Sperrgliedantrieb zum Bewegen des Sperrgliedes in die Sperrstellung auf. Der Sperrgliedantrieb kann beispielsweise nur dann angesteuert werden, wenn dieser tatsächlich benötigt wird. Im Gegensatz dazu werden die aus dem Stand der Technik bekannten Sperrglieder dauerhaft mit Hilfe einer Spiralfeder in Richtung der Sperrstellung gedrückt.

In einer besonders bevorzugten Ausführungsform der erfindungsgemä-βen Schaltvorrichtung ist ein manuell betätigbarer Gruppenwahlschalter zur Auswahl der Schaltposition der zweiten Schalteinrichtung vorgesehen, wobei der Sperrgliedantrieb und der Gruppenwahlschalter derart zusammenwirken, dass der Sperrgliedantrieb nur dann auf das Sperrglied einwirkt, wenn die durch den Gruppenwahlschalter gewählte Position nicht der tatsächlichen Schaltposition der zweiten Schalteinrichtung entspricht. Auf diese Weise wird die Bewegung des Sperrgliedes in die Sperrstellung schon dann vorbereitet, wenn der Fahrer durch Betätigen des Gruppenwahlschalters seine Absicht, die Gruppe zu wechseln, deutlich macht. Dies geschieht also noch vor dem Wechsel der Schaltposition der zweiten Schalteinrichtung, wodurch eine sichere Sperrung der ersten Schalteinrichtung in der Neutralposition gewährleistet ist.

In einer vorteilhaften Ausführungsform der erfindungsgemäßen Schaltvorrichtung wirkt die erste Schalteinrichtung derart mit der zweiten Schalteinrichtung zusammen, dass die zweite Schalteinrichtung erst dann in die gewählte Schaltposition bewegt werden kann, wenn die erste Schalteinrichtung in die Neutralposition geschaltet ist.

In einer weiteren vorteilhaften Ausführungsform der erfindungsgemäßen Schaltvorrichtung ist der Sperrgliedantrieb ein pneumatischer, elektrischer oder elektromagnetischer Antrieb.

Gemäß einer weiteren vorteilhaften Ausführungsform der erfindungsgemäßen Schaltvorrichtung ist das Sperrglied in die Freigabestellung vorgespannt. Dies kann beispielsweise durch eine dem Sperrglied zugeordnete Spiralfeder erfolgen.

In einer weiteren bevorzugten Ausführungsform der erfindungsgemäßen Schaltvorrichtung weist die erste Schalteinrichtung eine Schaltwelle, einen Schaltmitnehmer und/oder eine Schaltschiene auf, wobei das Sperrglied in der Sperrstellung die Schaltwelle, den Schaltmitnehmer oder die Schaltschiene sperrt.

In einer weiteren vorteilhaften Ausführungsform der erfindungsgemäßen Schaltvorrichtung greift das Sperrglied in der Sperrstellung in eine Aussparung in der Schaltwelle, dem Schaltmitnehmer oder der Schaltschiene ein.

In einer weiteren bevorzugten Ausführungsform der erfindungsgemäßen Schaltvorrichtung umfasst die zweite Schalteinrichtung eine Gruppenschaltschiene und einen pneumatischen, doppeltwirkenden Zylinder zum Antreiben der Gruppenschaltschiene. Wie bereits eingangs erläutert, kann das Sperrglied auch bei dieser Ausführungsform unabhängig von einer Schaltbewegung der Gruppenschaltschiene von der Freigabestellung in die Sperrstellung bewegt werden.

In einer weiteren vorteilhaften Ausführungsform der erfindungsgemäßen Schaltvorrichtung ist der Gruppenwahlschalter zur Auswahl der Schaltposition der zweiten Schaltvorrichtung derart ausgebildet, dass der Gruppenwahlschalter elektromagnetisch in eine mittlere Schaltstellung bewegbar ist, wenn die gewählte Schaltposition der zweiten Schalteinrichtung erreicht ist.

In einer vorteilhaften Ausführungsform der erfindungsgemäßen Schaltvorrichtung weist die Schaltvorrichtung wenigstens einen Sensor und eine Steuereinheit auf. Der Sensor kann beispielsweise als Drehzahl- bzw. Geschwindigkeitssensor ausgebildet sein und steht mit der Steuereinheit in Verbindung. Die zweite Schalteinrichtung ist hierbei erst dann in die gewählte Schaltposition bewegbar, wenn eine entsprechende Schaltbedingung erfüllt ist, beispielsweise eine Geschwindigkeitsbedingung. Durch die Steuereinheit wird hierfür ein entsprechendes Signal ausgegeben.

Das erfindungsgemäße Verfahren zur Steuerung einer Schaltvorrichtung für ein Gruppengetriebe umfasst den Verfahrensschritt des Bereitstellens einer Schaltvorrichtung für ein Gruppengetriebe mit einer ersten Schalteinrichtung zum Schalten der Gangstufen einer Gruppe, einer zweiten Schalteinrichtung zum Schalten der Gruppen des Gruppengetriebes und einer Sperreinrichtung zum Sperren der ersten Schalteinrichtung in einer Neutralposition und ist durch den Verfahrensschritt des Sperrens der ersten Schalteinrichtung in der Neutralposition unabhängig von einer Schaltbewegung der zweiten Schalteinrichtung gekennzeichnet. Bezüglich der Vorteile des erfindungsgemäßen Verfahrens sei auf die obige Beschreibung der erfindungsgemäßen Schaltvorrichtung verwiesen.

In einer bevorzugten Ausführungsform des erfindungsgemäßen Verfahrens weist die bereitgestellte Schaltvorrichtung ferner einen manuell betätigbaren Gruppenwahlschalter zur Auswahl der Schaltposition der zweiten Schalteinrichtung auf, wobei ferner der Verfahrensschritt des Aktivierens der Sperreinrichtung nur dann, wenn die durch den Gruppenwahlschalter gewählte Position nicht der tatsächlichen Schaltposition der zweiten Schalteinrichtung entspricht, vorgesehen ist.

In einer vorteilhaften Ausführungsform des erfindungsgemäßen Verfahrens wird die zweite Schalteinrichtung erst dann in die gewählte Schaltposition bewegt, wenn die erste Schalteinrichtung in die Neutralposition geschaltet ist.

In einer weiteren vorteilhaften Ausführungsform des erfindungsgemäßen Verfahrens wird die Sperreinrichtung pneumatisch, elektrisch oder elektromagnetisch angetrieben.

In einer besonders bevorzugten Ausführungsform des erfindungsgemä-βen Verfahrens ist die bereitgestellte Schaltvorrichtung eine oben beschriebene erfindungsgemäße Schaltvorrichtung.

Die Erfindung wird im Folgenden anhand beispielhafter Ausführungsformen unter Bezugnahme auf die zugehörigen Zeichnungen näher erläutert.
Es zeigen:
- Fig. 1: eine schematische Darstellung einer ersten Ausführungsform der erfindungsgemäßen Schaltvorrichtung für ein Gruppengetriebe,
- Fig. 2: eine schematische Darstellung einer zweiten Ausführungsform der erfindungsgemäßen Schaltvorrichtung für ein Gruppengetriebe,
- Fig. 3: eine schematische Darstellung einer dritten Ausführungsform der erfindungsgemäßen Schaltvorrichtung für ein Gruppengetriebe,
- Fig. 4: eine schematische Darstellung einer vierten Ausführungsform der erfindungsgemäßen Schaltvorrichtung für ein Gruppengetriebe.

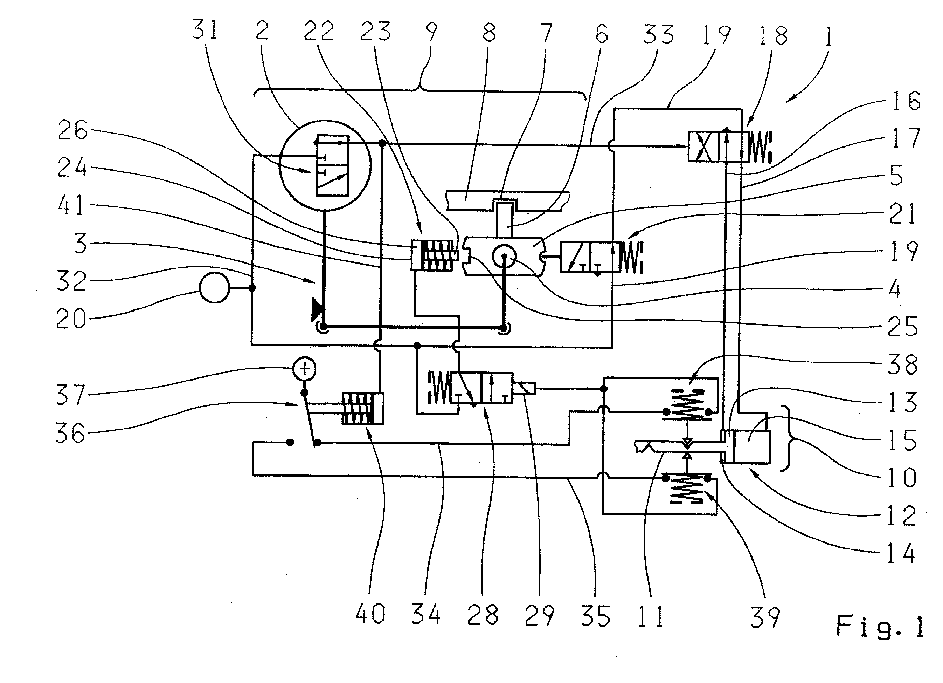

Fig. 1 zeigt eine schematische Darstellung einer ersten Ausführungsform der erfindungsgemäßen Schaltvorrichtung 1 für ein Gruppengetriebe. Die Schaltvorrichtung 1 weist zunächst einen manuell betätigbaren Schalthebel 2 auf, durch dessen Verschwenken eine Rotationsbewegung über ein entsprechendes Schaltgestänge 3 auf eine Schaltwelle 4 übertragbar ist. An der Schaltwelle 4 ist ein Schaltmitnehmer 5 vorgesehen, der einen sich radial nach außen erstreckenden Schaltfinger 6 aufweist. Der Schaltfinger 6 erstreckt sich in radialer Richtung in eine Gasse 7 in einer axial verschiebbaren Schaltschiene 8. Durch das Drehen der Schaltwelle 4 wird somit die Schaltschiene 8 in Längsrichtung verschoben, um eine Gangstufe einer Gruppe zu schalten. Bezüglich des Zusammenwirkens zwischen Schaltschiene 8 und den Gangstufen sei auf den Stand der Technik verwiesen. Der Schalthebel 2, das Gestänge 3, die Schaltwelle 4, der Schaltmitnehmer 5, der Schaltfinger 6 und die Schaltschiene 8 bilden somit eine erste Schalteinrichtung 9 zum Schalten der Gangstufen einer Gruppe aus.

Die Schaltvorrichtung 1 umfasst ferner eine zweite Schalteinrichtung 10 zum Schalten der Gruppen des Gruppengetriebes, wobei in den gezeigten Ausführungsformen jeweils zwischen einer schnellen und einer langsamen Gruppe geschaltet werden kann. Die zweite Schalteinrichtung 10 umfasst eine Gruppenschaltschiene 11, die von einer ersten Schaltposition, in der eine erste Gruppe geschaltet ist, in axialer Richtung in eine zweite Schaltposition verschoben werden, in der eine zweite Gruppe geschaltet ist. Die Gruppenschaltschiene 11 wir dabei über einen pneumatischen, doppeltwirkenden Zylinder 12 angetrieben, dessen Kolben 13 den Zylinderraum in eine erste und zweite Kammer 14, 15 unterteilt. Je nachdem, welche der beiden Kammern 14, 15 mit Druckluft beaufschlagt wird, bewegt sich die Gruppenschaltschiene 11 vor oder zurück. Zu der ersten Kammer 14 führt eine erste Leitung 16, während eine zweite Leitung 17 in die zweite Kammer 15 mündet. Beide Leitungen 16, 17 führen mit ihrem dem Zylinder 12 abgewandten Ende zu einem ersten Pneumatikventil 18, das als 3/2-Wegeventil ausgebildet ist.

Das erste Pneumatikventil 18 kann von einer ersten Stellung, in der die erste Kammer 14 mit Druckluft versorgt wird, in eine zweite Stellung geschaltet werden, in der die zweite Kammer 15 mit Druckluft versorgt wird und die in Fig. 1 gezeigt ist. Die Druckluft für die Kammern 14, 15 wird dabei über eine erste Versorgungsleitung 19 eines Vorratsbehälters 20 zu dem ersten Pneumatikventil 18 geführt. In dieser ersten Versorgungsleitung 19 ist ein zweites Pneumatikventil 21 vorgesehen, das als 2/2-Wegeventil ausgebildet ist. Das zweite Pneumatikventil 21 wird dabei von dem Schaltmitnehmer 5 geschaltet. Befindet sich die erste Schalteinrichtung 9 - und somit auch der Schaltmitnehmer 5 - in der Neutralposition, so ist das zweite Pneumatikventil 21 geöffnet und die Versorgung der ersten oder zweiten Kammer 14, 15 mit Druckluft über die erste Versorgungsleitung 19 gewährleistet. Sollte sich die erste Schalteinrichtung 9 hingegen in einer Schaltposition befinden, in der eine Gangstufe geschaltet ist, so ist das zweite Pneumatikventil 21 geschlossen. Ein Gruppenwechsel mit Hilfe der zweiten Schalteinrichtung 10 ist dann nicht möglich.

Die Schaltvorrichtung 1 weist ferner eine Sperreinrichtung 22 auf. Die dargestellte Sperreinrichtung 22 umfasst in der dargestellten Ausführungsform ein bolzenartiges Sperrglied 23 und einen ansteuerbaren Sperrgliedantrieb 24. Das Sperrglied 23 kann mit Hilfe des Sperrgliedantriebs 24 von der in Fig. 1 gezeigten Freigabestellung, in der die erste Schalteinrichtung 9 nicht blockiert bzw. gesperrt ist, in eine Sperrstellung (nicht dargestellt) bewegt werden, in der die erste Schalteinrichtung 9 in der Neutralposition gesperrt ist. Um die erste Schalteinrichtung 9 zu sperren, greift das Sperrglied 23 in der Sperrstellung in eine Aussparung 25 in dem Schaltmitnehmer 5, so dass dieser nicht mehr gedreht werden kann.

Der Sperrgliedantrieb 24 ist als pneumatischer Antrieb ausgebildet, der einen Antriebszylinder umfasst, dessen Kammer 26 über eine zweite Versorgungsleitung 27 mit Druckluft beaufschlagbar ist, wobei die zweite Versorgungsleitung 27 mit der ersten Versorgungsleitung 19 oder direkt mit dem Vorratsbehälter 20 in Verbindung steht. In der zweiten Versorgungsleitung 27 ist ferner ein drittes Pneumatikventil 28 angeordnet. Das dritte Pneumatikventil 28 ist wiederum als 2/2-Wegeventil ausgebildet und wird von einem Elektromagneten 29 geschaltet. Die Funktion des dritten Pneumatikventils 28 wird später eingehender erläutert. Ist die Kammer 26 des Antriebszylinders nicht mit Druck beaufschlagt, so ist das Sperrglied mit Hilfe einer Spiralfeder 30 in die Freigabestellung vorgespannt.

Die Schaltvorrichtung 1 weist ferner einen manuell betätigbaren Gruppenwahlschalter 31 zur Auswahl der Schaltposition der zweiten Schalteinrichtung 10 auf. Der Gruppenwahlschalter 31 ist in der dargestellten Ausführungsform als viertes Pneumatikventil ausgebildet, das einerseits über eine dritte Versorgungsleitung 32 mit dem Vorratsbehälter 20 und andererseits mit einer Steuerleitung 33 verbunden ist, die zu dem ersten Pneumatikventil 18 führt. Das erste Pneumatikventil 18 wird dabei in Abhängigkeit von der Stellung des vierten Pneumatikventils bzw. Gruppenwahlschalters 31 geschaltet. Der Gruppenwahlschalter 31 bzw. das vierte Pneumatikventil kann dabei in eine erste Stellung, die in den Figuren gezeigt ist und in der keine Druckluft an die Steuerleitung 33 weitergegeben wird, und in eine zweite Stellung geschaltet werden, in der die Druckluft über die dritte Versorgungsleitung 32 in die Steuerleitung 33 zu dem ersten Pneumatikventil 18 gelangt, um dieses zu schalten.

In der Schaltvorrichtung 1 sind ferner eine erste elektrische Leitung 34 und eine zweite elektrische Leitung 35 vorgesehen, die wahlweise über einen Schalter 36 mit einer Spannungsquelle 37 verbindbar sind, wobei beide elektrischen Leitungen 34, 35 jeweils der Versorgung des Elektromagneten 29 dienen. In der ersten elektrischen Leitung 34 ist ein mechanisch betätigbarer erster Schalter 38 und in der zweiten elektrischen Leitung 35 ist ein mechanisch betätigbarer zweiter Schalter 39 vorgesehen, wobei der erste und zweite Schalter 38, 39 durch die Gruppenschaltschiene 11 betätigt werden können, wenn diese in unterschiedliche Stellungen in Längsrichtung verschoben wird. Der Schalter 36 zum wahlweisen Verbinden der Spannungsquelle 37 mit den elektrischen Leitungen 34, 35 kann durch einen Druckwechselschalter 40 betätigt werden, der über eine vierte Versorgungsleitung 41 mit der Steuerleitung 33 verbunden ist.

Nachstehend werden die Funktionsweise sowie weitere Merkmale der ersten Ausführungsform der Schaltvorrichtung 1 unter Bezugnahme auf Fig. 1 beschrieben. Es wird zunächst davon ausgegangen, dass das Gruppengetriebe in der in Fig. 1 gezeigten Stellung der Schaltvorrichtung 1 in die langsame Gruppe geschaltet ist. Um nunmehr die schnelle Gruppe zu wählen, betätigt der Fahrer den Gruppenwahlschalter 31 in die andere Stellung, d.h. er wählt die Schaltposition der zweiten Schalteinrichtung 10 für die schnelle Gruppe. Hierdurch gelangt die Druckluft aus dem Vorratsbehälter 20 über die dritte Versorgungsleitung 32 in die Steuerleitung 33, wo sie ein Umschalten des ersten Pneumatikventils 18 bewirkt. Zeitgleich gelangt über die Steuerleitung 33 und die vierte Versorgungsleitung 41 Druckluft in den Druckwechselschalter 40, der den Schalter 36 umlegt, so dass die Spannungsquelle 37 mit der zweiten elektrischen Leitung 35 verbunden ist. Da sich der erste mechanisch betätigbare Schalter 39 in der Schließposition befindet, wird der Elektromagnet 29 über die zweite elektrische Leitung 35 mit Strom versorgt, so dass das dritte Pneumatikventil 28 in die Öffnungsstellung geschaltet wird. Somit kann über die dritte Versorgungsleitung 27 Druckluft in die Kammer 16 der Sperreinrichtung 22 gelangen, so dass der Sperrgliedantrieb 24 auf das Sperrglied 23 einwirkt, um dieses in die Sperrstellung zu verschieben.

Der Sperrgliedantrieb 24 und der Gruppenwahlschalter 31 wirken derart zusammen, dass der Sperrgliedantrieb 24 nur dann auf das Sperrglied 23 einwirkt, wenn die durch den Gruppenwahlschalter 31 gewählte Schaltposition nicht der tatsächlichen Schaltposition der zweiten Schalteinrichtung 10 bzw. der Gruppenschaltschiene 11 entspricht. Dies wird bei dieser Ausführungsform durch den ersten und zweiten mechanisch betätigbaren Schalter 38, 39 erreicht. Sollte die zweite Schalteinrichtung 10 beispielsweise schon in eine Schaltposition geschaltet sein, in der die schnelle Gruppe geschaltet ist, so wäre der zweite Schalter 39 geöffnet. Selbst wenn der Gruppenwahlschalter 31 in die schnelle Gruppe geschaltet wäre, so würde dies nicht zu einer Sperrung der ersten Schalteinrichtung 9 durch die Sperreinrichtung 22 führen, da der zweite mechanisch betätigbare Schalter 39 die zweite elektrische Leitung 35 unterbricht.

Aus der vorangehenden Beschreibung ist ersichtlich, dass das Sperrglied 23 unabhängig von einer Schaltbewegung der zweiten Schalteinrichtung 10 von der Freigabestellung in die Sperrstellung bewegt werden kann und zwar bereits dann, wenn der Fahrer lediglich durch das Umschalten des Gruppenwahlschalters 31 seinen Willen zum Gruppenwechsel bekundet. Erst danach folgt das tatsächliche Schalten der zweiten Schalteinrichtung, wie dies nachstehend beschrieben wird.

Durch das Umschalten des ersten Pneumatikventils 18 mit Hilfe der Druckluft in der Steuerleitung 33 wird die Druckluft aus dem Vorratsbehälter 20 über die zweite Versorgungsleitung 19 nunmehr in die erste Kammer 14 innerhalb des Zylinders 12 geleitet. Voraussetzung hierfür ist jedoch, dass sich die erste Schalteinrichtung 9 in der Neutralposition befindet - was im vorliegenden Beispiel der Fall ist -, so dass auch das zweite Pneumatikventil 21 in der zweiten Versorgungsleitung 19 geöffnet ist. Auch das Sperrglied 23 kann erst nach Erreichen dieser Neutralposition in die Aussparung 25 an dem Schaltmitnehmer 5 bewegt werden, um diesen zu blockieren. Da sich die erste Kammer 14 nunmehr mit Druckluft füllt, wird die Gruppenschaltschiene 11 von der gezeigten Schaltposition zur Vollziehung des Gruppenwechsels in eine zweite Schaltposition verschoben. Da die erste Schalteinrichtung 9 während des Gruppenwechsels gesperrt ist, kann die Schaltschiene 8 nicht mehr in Längsrichtung verschoben werden, um eine andere Gangstufe zu schalten.

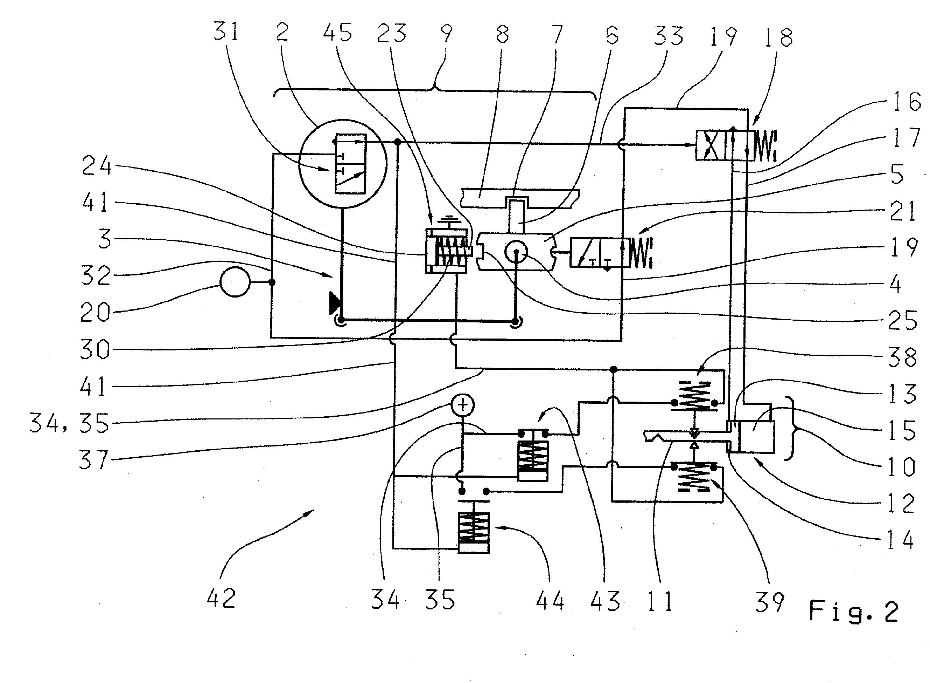

Fig. 2 zeigt eine zweite Ausführungsform der erfindungsgemäßen Schaltvorrichtung 42, die der ersten Ausführungsform weitgehend ähnelt, so dass nachstehend lediglich auf die Unterschiede zur ersten Ausführungsform eingegangen werden soll. Für gleiche oder ähnliche Teile werden gleiche Bezugszeichen verwendet, so dass diesbezüglich die obige Beschreibung entsprechend gilt.

Bei der zweiten Ausführungsform wird auf einen Druckwechselschalter 40 (Fig. 1) zu Gunsten eines ersten Druckschalters 43 in der ersten elektrischen Leitung 34 und eines zweiten Druckschalters 44 in der zweiten elektrischen Leitung 35 verzichtet. Der erste und der zweite Druckschalter 43, 44 werden über die vierte Versorgungsleitung 41 mit Druckluft versorgt, wobei der erste Druckschalter 43 öffnet, wenn er mit Druck beaufschlagt wird, während sich der zweite Druckschalter 44 in diesem Falle schließen würde. Darüber hinaus ist die Sperreinrichtung 45 bei der zweiten Ausführungsform als elektromagnetischer Sperrzylinder ausgebildet, der direkt über die elektrischen Leitungen 34, 35 mit Strom versorgt werden kann.

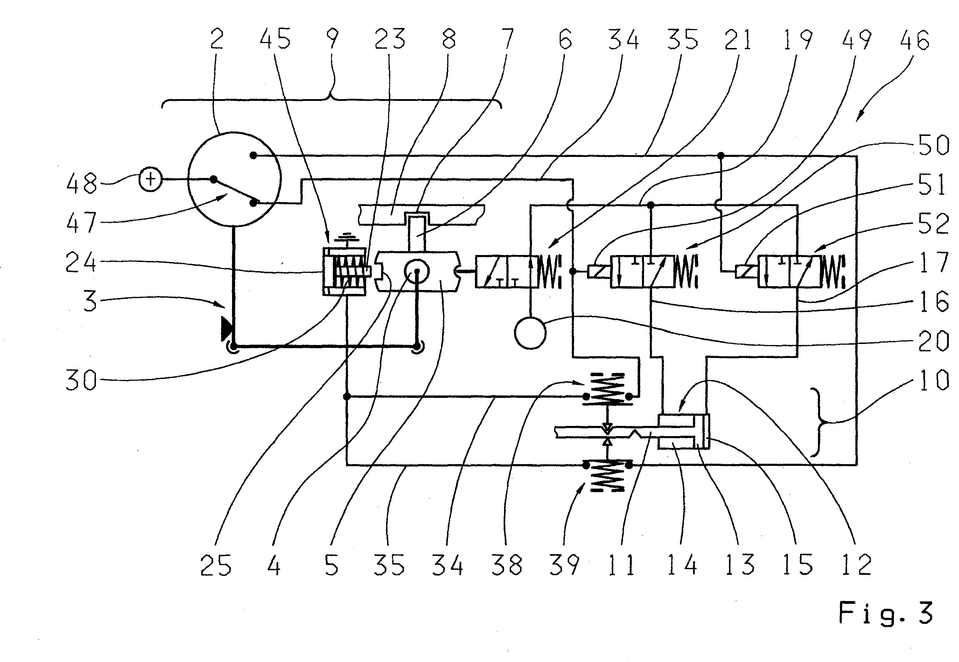

Fig. 3 zeigt eine dritte Ausführungsform der erfindungsgemäßen Schaltvorrichtung 46, die der ersten und zweiten Ausführungsform teilweise ähnelt, so dass nachstehend lediglich auf die Unterschiede zur ersten und zweiten Ausführungsform eingegangen werden soll, Für gleiche oder ähnliche Teile werden gleiche Bezugszeichen verwendet, so dass diesbezüglich die obige Beschreibung entsprechend gilt.

Im Gegensatz zu den beiden vorangehenden Ausführungsformen ist der Gruppenwahlschalter 47 als elektrischer Schalter ausgebildet, der eine Spannungsquelle 48 wahlweise mit der ersten und zweiten elektrischen Leitung 34, 35 verbinden kann. Über die erste elektrische Leitung 34 wird ein erster Elektromagnet 49 zur Steuerung eines Pneumatikventils 50 in der Leitung 16 versorgt, während ein zweiter Elektromagnet 51 zur Steuerung eines Pneumatikventils 52 in der Leitung 17 vorgesehen ist. Beide elektrischen Leitungen 34, 35 führen wie bei der zweiten Ausführungsform zu dem elektromagnetischen Sperrzylinder der Sperreinrichtung 45. Die Druckluft in dem Vorratsbehälter 20 dient bei dieser Ausführungsform nicht mehr der Steuerung, sondern nur noch der Erzeugung einer Bewegung der Gruppenschaltschiene 11 der zweiten Schalteinrichtung 10.

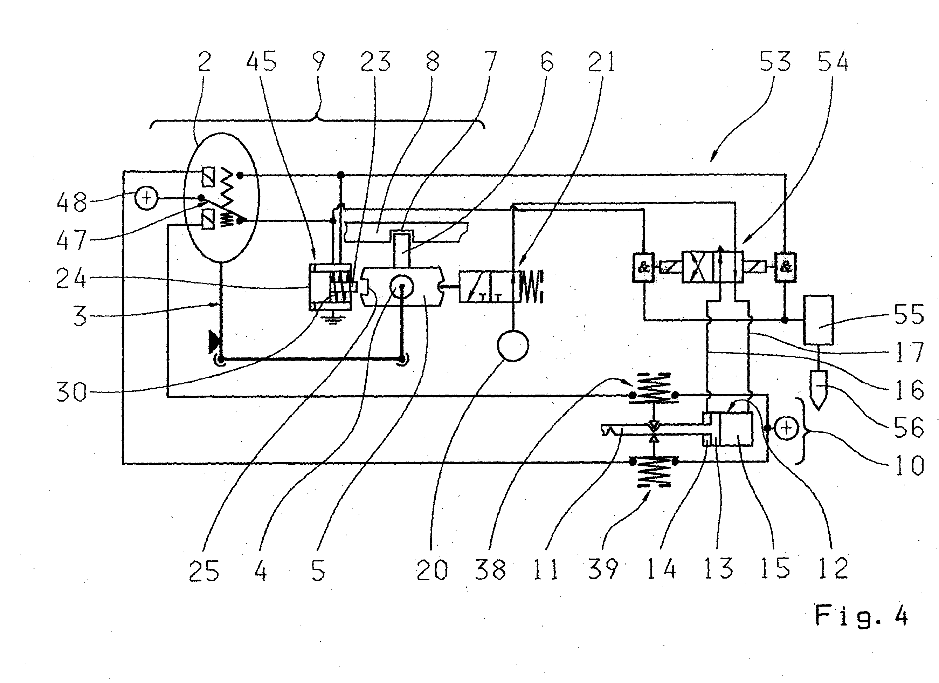

Fig. 4 zeigt eine vierte Ausführungsform der erfindungsgemäßen Schaltvorrichtung 53, die den vorangehenden Ausführungsformen teilweise ähnelt, so dass nachstehend lediglich auf die Unterschiede zur ersten und zweiten Ausführungsform eingegangen werden soll. Für gleiche oder ähnliche Teile werden gleiche Bezugszeichen verwendet, so dass diesbezüglich die obige Beschreibung entsprechend gilt.

In der vierten Ausführungsform der erfindungsgemäßen Schaltvorrichtung 53 wird an Stelle von zwei Pneumatikventilen 50, 52 lediglich ein Pneumatikventil 54 verwendet, das unter anderem über eine Steuereinheit 55 gesteuert wird. Die Steuereinheit 55 ist beispielsweise als Elektronikmodul ausgebildet und steht mit einem Sensor 56 in Verbindung, beispielsweise mit einem Drehzahl- oder Geschwindigkeitssensor. Der Gruppenschalter 47 weist hier drei Schaltstellungen auf, zwei Einschaltpositionen zum Schalten der Gruppen des Gruppengetriebes und eine mittlere Schaltstellung. Das Pneumatikventil 54 wird betätigt, wenn der Gruppenschalter 47 am Schalthebel 2 in eine seiner Einschaltpositionen umgelegt wird und die Bedingung der Steuereinheit 55 erfüllt ist (UND-Verknüpfung). Nach dem Betätigen des Gruppenwahlschalters 47 in eine seiner Einschaltpositionen wird das Sperrglied 23 direkt aktiviert. Sobald sich der Schalthebel 2 in seiner Neutralposition befindet, wird durch das Sperrglied 23 eine Schaltung innerhalb der ersten Schalteinrichtung 9 verhindert, da eine Schaltbewegung der Schaltschiene 8 blockiert wird. Um eine Schaltung über die zweite Schalteinrichtung 10 durchführen zu können, muss an der Steuereinheit 55 eine entsprechende Schaltbedingung vorliegen, beispielsweise eine elektronische Geschwindigkeitsbedingung. Hierzu wird über den Sensor 56 ein Signal erfasst und an die Steuereinheit 55 weitergegeben, welche dann an einem Ausgang ein weiteres Signal ausgibt. Während der Schaltung einer Gruppe des Gruppengetriebes über die zweite Schalteinrichtung 10, befindet sich der Gruppenwahlschalter 47 weiterhin in der Einschaltposition für die gewünschte Gruppe. Das Sperrglied 23 ist hierbei weiterhin aktiviert. Nach dem Schalten der Gruppe (die Gruppenschaltschlene 11 hat ihre andere Schaltposition erreicht), wird ein Elektromagnet im Gruppenwahlschalter 47 derart bestromt bzw. angesteuert, dass der Gruppenwahlschalter 47 seine mittlere Schaltstellung einnimmt. Befindet sich der Gruppenwahlschalter 47 in seiner mittleren Schaltstellung, dann wird der Schaltkreis zum Sperrgliedantrieb 24 unterbrochen, wobei die geschaltete Gruppe des Gruppengetriebes beibehalten wird. Das Sperrglied 23 wird somit nicht mehr angesteuert und die Sperre der Schaltschiene 8 aufgehoben. Nachfolgend kann der Fahrzeugführer über den Schalthebel 2 die Schaltung entsprechend zu Ende führen.

### Bezugszeichen

- 1: Schaltvorrichtung (erste Ausführungsform)
- 2: Schalthebel
- 3: Schaltgestänge
- 4: Schaltwelle
- 5: Schaltmitnehmer
- 6: Schaltfinger
- 7: Gasse
- 8: Schaltschiene
- 9: erste Schalteinrichtung
- 10: zweite Schalteinrichtung
- 11: Grupperischaltschiene
- 12: pneumatischer, doppeltwirkenden Zylinder
- 13: Kolben
- 14: erste Kammer
- 15: zweite Kammer
- 16: erste Leitung
- 17: zweite Leitung
- 18: erstes Pneumatikventil
- 19: erste Versorgungsleitung
- 20: Vorratsbehälter
- 21: zweites Pneumatikventil
- 22: Sperreinrichtung
- 23: Sperrglied
- 24: Sperrgliedantrieb
- 25: Aussparung
- 26: Kammer
- 27: zweite Versorgungsleitung
- 28: drittes Pneumatikventil
- 29: Elektromagnet
- 30: Spiralfeder
- 31: Gruppenwahlschalter
- 32: dritte Versorgungsleitung
- 33: Steuerleitung
- 34: erste elektrische Leitung
- 35: zweite elektrische Leitung
- 36: Schalter
- 37: Spannungsquelle
- 38: erster mechanisch betätigbarer Schalter
- 39: zweiter mechanisch betätigbarer Schalter
- 40: Druckwechseischalter
- 41: vierte Versorgungsleitung
- 42: Schaltvorrichtung (zweite Ausführungsform)
- 43: erster Druckschalter (Öffner)
- 44: zweiter Druckschalter (Schließer)
- 45: Sperreinrichtung (elektromagnetischer Sperrzylinder)
- 46: Schaltvorrichtung (dritte Ausführungsform)
- 47: Gruppenwechselschalter (elektrischer Schalter)
- 48: Spannungsquelle
- 49: erster Elektromagnet
- 50: Pneumatikventil
- 51: zweiter Elektromagnet
- 52: Pneumatikventil
- 53: Schaltvorrichtung (vierte Ausführungsform)
- 54: Pneumatikventil
- 55: Steuereinheit, Elektronikmodul
- 56: Sensor

## Patentansprüche

1. Schaltvorrichtung für ein Gruppengetriebe mit einer ersten Schalteinrichtung (9) zum Schalten der Gangstufen einer Gruppe, einer zweiten Schalteinrichtung (10) zum Schalten der Gruppen des Gruppengetriebes und einer Sperreinrichtung (22, 45), die ein Sperrglied (23) aufweist, das von einer Freigabestellung in eine Sperrstellung bewegbar ist, in der die erste Schalteinrichtung (9) in einer Neutralposition gesperrt ist, **dadurch gekennzeichnet, dass** das Sperrglied (23) unabhängig von einer Schaltbewegung der zweiten Schalteinrichtung (10) von der Freigabestellung in die Sperrstellung bewegbar ist.

2. Schaltvorrichtung nach Anspruch 1, **dadurch gekennzeich-net, dass** die Sperreinrichtung (22, 45) einen ansteuerbaren Sperrgliedantrieb (24) zum Bewegen des Sperrgliedes (23) in die Sperrstellung aufweist.

3. Schaltvorrichtung nach Anspruch 2, **dadurch gekennzeichnet, dass** ein manuell betätigbarer Gruppenwahlschalter (31, 47) zur Auswahl der Schaltposition der zweiten Schalteinrichtung (10) vorgesehen ist, wobei der Sperrgliedantrieb (24) und der Gruppenwahlschalter (31, 47) derart zusammenwirken, dass der Sperrgliedantrieb (24) nur dann auf das Sperrglied (23) einwirkt, wenn die durch den Gruppenwahlschalter (31, 47) gewählte Position nicht der tatsächlichen Schaltposition der zweiten Schalteinrichtung (10) entspricht.

4. Schaltvorrichtung nach einem der vorangehenden Ansprüche, **dadurch gekennzeichnet , dass** die erste Schalteinrichtung (9) derart mit der zweiten Schalteinrichtung (10) zusammenwirkt, dass die zweite Schalteinrichtung (10) erst dann in die gewählte Schaltposition bewegbar ist, wenn die erste Schalteinrichtung (9) in die Neutralposition geschaltet ist.

5. Schaltvorrichtung nach einem der Ansprüche 2 bis 4, **dadurch gekennzeichnet, dass** der Sperrgliedantrieb (24) ein pneumatischer, elektrischer oder elektromagnetischer Antrieb ist.

6. Schaltvorrichtung nach einem der vorangehenden Ansprüche, **dadurch gekennzeichnet , dass** das Sperrglied (23) in die Freigabestellung vorgespannt ist.

7. Schaltvorrichtung nach einem der vorangehenden Ansprüche, **dadurch gekennzeichnet, dass** die erste Schalteinrichtung (9) eine Schaltwelle (4), einen Schaltmitnehmer (5) und/oder eine Schaltschiene (8) aufweist, wobei das Sperrglied (23) in der Sperrstellung die Schaltwelle, den Schaltmitnehmer (5) oder die Schaltschiene sperrt.

8. Schaltvorrichtung nach Anspruch 7, **dadurch gekennzeichnet, dass** das Sperrglied (23) in der Sperrstellung in eine Aussparung (25) in der Schaltwelle, dem Schaltmitnehmer (5) oder der Schaltschiene eingreift.

9. Schaltvorrichtung nach einem der vorangehenden Ansprüche, **dadurch gekennzeichnet, dass** die zweite Schalteinrichtung(10) eine Gruppenschaltschiene (11) und einen pneumatischen, doppeltwirkenden Zylinder (12) zum Antreiben der Gruppenschaltschiene (11) umfasst.

10. Schaltvorrichtung nach Anspruch 1 oder 2, **dadurch gekenn-zeichnet,** dass ein Gruppenwahlschalter (47) zur Auswahl der Schaltposition der zweiten Schaltvorrichtung (10) derart ausgebildet ist, dass der Gruppenwahlschalter (47) elektromagnetisch in eine mittlere Schaltstellung bewegbar ist, wenn die gewählte Schaltposition der zweiten Schalteinrichtung (10) erreicht ist.

11. Schaltvorrichtung nach einem der vorangehenden Ansprüche, **dadurch gekennzeichnet, dass** die Schaltvorrichtung wenigstens einen Sensor (56) und eine Steuereinheit (55) aufweist und die zweite Schalteinrichtung (10) erst dann in die gewählte Schaltposition bewegbar ist, wenn eine entsprechende Schaltbedingung erfüllt ist, beispielsweise eine Geschwindigkeitsbedingung.

12. Verfahren zur Steuerung einer Schaltvorrichtung für ein Gruppengetriebe mit dem Verfahrensschritt
Bereitstellen einer Schaltvorrichtung für ein Gruppengetriebe mit einer ersten Schalteinrichtung zum Schalten der Gangstufen einer Gruppe, einer zweiten Schalteinrichtung zum Schalten der Gruppen des Gruppengetriebes und einer Sperreinrichtung zum Sperren der ersten Schalteinrichtung in einer Neutralposition,
**gekennzeichnet durch** den Verfahrensschritt des Sperrens der ersten Schalteinrichtung in der Neutralposition unabhängig von einer Schaltbewegung der zweiten Schalteinrichtung.

13. Verfahren nach Anspruch 12, bei dem die bereitgestellte Schaltvorrichtung ferner einen manuell betätigbaren Gruppenwahlschalter zur Auswahl der Schaltposition der zweiten Schalteinrichtung aufweist, mit dem weiteren Verfahrensschritt des Aktivierens der Sperreinrichtung nur dann, wenn die durch den Gruppenwahlschalter gewählte Position nicht der tatsächlichen Schaltposition der zweiten Schalteinrichtung entspricht.

14. Verfahren nach einem der Ansprüche 12 oder 13, bei dem die zweite Schalteinrichtung erst dann in die gewählte Schaltposition bewegt wird, wenn die erste Schalteinrichtung in die Neutralposition geschaltet ist.

15. Verfahren nach einem der Ansprüche 12 bis 14, bei dem die Sperreinrichtung pneumatisch, elektrisch oder elektromagnetisch angetrieben wird.

16. Verfahren nach einem der Ansprüche 12 bis 15, bei dem die bereitgestellte Schaltvorrichtung eine Schaltvorrichtung nach einem der Ansprüche 1 bis 9 ist.
